# EUROPEAN PATENT APPLICATION

(11) **EP 3 521 509 A1**
(43) Date of publication of application: **07.08.2019**
(21) Application number: 16917614.6
(22) Date of filing: 29.09.2016
(51) Int. Cl.: D21F 5/00

(54) **CONTAMINATION-PREVENTING AGENT COMPOSITION AND CONTAMINATION PREVENTING METHOD**

(71) Applicant: Maintech Co., Ltd., Chiyoda-ku Tokyo 100-0005 (JP)
(72) Inventor: SEKIYA, Hiroshi, Tokyo 100-0005 (JP); KOBAYASHI, Daisuke, Tokyo 100-0005 (JP); SAWADA, Hiraku, Fuji-shi Shizuoka 417-0003 (JP); YUSA, Kazuyuki, Fuji-shi Shizuoka 417-0003 (JP)
(74) Representative: Goddar, Heinz J.
(86) International application number: PCT/JP2016/004406
(87) International publication number: WO 2018/061060

(57) **Abstract**

To provide a contamination-preventing agent composition and a contamination preventing method which even if the composition is imparted only to a dryer on the upstream side, a sufficient amount of the composition can be imparted to a dryer on the downstream side via a wet paper, and pitch contamination of a plurality of dryers can be prevented sufficiently as a whole.

The present invention is a contamination-preventing agent composition imparted to dryers D1 to D8 in a dry part D of a paper machine and comprising an emulsion, a re-transfer agent and water, wherein the re-transfer agent has a cloud point of 55°C or higher and an HLB value of 8 to 15, and preferably a contamination-preventing agent composition wherein the dynamic surface tension value at a lifetime of 100 ms by a maximum bubble pressure method is 65 mN/m or less.

## Description

### Technical field

The present invention relates to a contamination-preventing agent composition and a contamination preventing method, and more particularly to a contamination-preventing agent composition and a contamination preventing method capable of preventing pitch contamination of a plurality of dryers in a dry part of a paper machine.

### Background Art

A paper making process in a paper machine generally has a wire part in which a liquid in which pulp is dispersed in water is placed on a mesh (wire) for papermaking and excess water is naturally dropped to obtain a wet paper, a press part for transferring moisture in the wet paper to a felt by passing the wet paper between a pair of press rolls and pressing it by the press rolls via the felt, thereby dewatering the wet paper, a dry part for drying the paper by contacting the wet paper which has passed through the press part with a plurality of heated driers, to obtain a paper, and a reel part for winding the paper on a bar called a spool.

In the above-mentioned dry part, there is a problem that the pitch sticks to the surface of a dryer. If the pitch sticks to the dryer, a wet paper is contaminated, and the yield thereof is significantly reduced.

On the other hand, a silicone-based contamination-preventing agent composition and a non-silicone contamination-preventing agent composition are known as a contamination-preventing agent composition for preventing pitch contamination in a dry part of a paper making process.

For example, as the silicone-based contamination-preventing agent composition, a contamination-preventing agent composition containing a polysiloxane compound having a predetermined chemical structural formula and having from 0.5 to 5 amino-modified groups per molecule of the polysiloxane compound is known (see, e.g., Patent Document 1).

Further, as the non-silicone contamination-preventing agent composition, a contamination-preventing agent composition containing a non-silicone oil and an emulsifier for emulsifying the non-silicone oil, wherein the emulsifier is a neutralized product of a fatty acid and an amine compound is known (see, e.g., Patent Document 2).

However, with these contamination-preventing agent compositions, although it is possible to prevent the pitch contamination of a dryer on the upstream side to which the contamination-preventing agent composition is imparted, it is impossible to sufficiently prevent the pitch contamination of a dryer on the downstream side only by itself. For this reason, it is necessary to impart a contamination-preventing agent composition to each of a plurality of dryers.

In the present specification, "dryer on the upstream side" means a dryer positioned upstream with respect to traveling of a wet paper, and "dryer on the downstream side" means a dryer positioned downstream with respect to traveling of a wet paper.

In contrast, there is known a contamination-preventing agent composition containing a low molecular polysiloxane compound having a predetermined chemical structural formula and a polymer polysiloxane compound having a predetermined chemical structural formula, wherein the kinematic viscosity of the low molecular polysiloxane compound at 25°C is 10 to 300 mm²/s, the kinematic viscosity of the polymer polysiloxane compound at 25°C is 40 to 90,000 mm²/s, the number of modified groups per molecule of the low molecular polysiloxane compound is from 0.1 to 3.0, the number of modified groups per molecule of the polymer polysiloxane compound is 1.0 to 10, and the repeating number m of the polysiloxane unit in the low molecular polysiloxane compound and the repeating number n of the polysiloxane unit in the polymer polysiloxane compound satisfy the relationship of 2 m ≤ n (see, e.g., Patent Document 3).

In such a contamination-preventing agent composition, the polymer polysiloxane compound forms a coating film on a dryer on the upstream side, while the low molecular polysiloxane compound transfers to a wet paper and is carried by the wet paper, and the low-molecular polysiloxane compound is re-transferred to a dryer on the downstream side to which the wet paper is guided, hence, pitch contamination of a plurality of dryers can be prevented as a whole.

### Citation List

### Patent Literature

PTL 1: Japanese Patent No. 4868628
PTL 2: Japanese Patent No. 4828001
PTL 3: Japanese Patent No. 4868629

### Summary of Invention

### Technical Problem

However, with the contamination-preventing agent composition in the above Patent Document 3, it is possible to prevent pitch contamination of a plurality of dryers as a whole, but particularly in a dryer on the downstream side, it cannot be said that pitch contamination can be sufficiently prevented.

That is, with the contamination-preventing agent composition in the above Patent Document 3, the polymer polysiloxane compound to form a coating film is not transferred to the wet paper, and only the low molecular polysiloxane compound is transferred to the wet paper, hence, there is a disadvantage that the amount of re-transfer to the wet paper (hereinafter referred to as "pick-up amount.") is small, and sufficient amount cannot be imparted to a dryer on the downstream side.

In addition, since the coating film composed of the low-molecular polysiloxane compound is extremely weak and easily re-transferred, there is also a disadvantage that even if it is imparted to a dryer on the downstream side, it is re-transferred again and it is hard to remain on the dryer.

The present invention has been made in view of the above circumstances, and has an object of providing a contamination-preventing agent composition and a contamination preventing method which even if the composition is imparted only to a dryer on the upstream side, a sufficient amount of the composition can be imparted to a dryer on the downstream side via a wet paper, and pitch contamination of a plurality of dryers can be prevented sufficiently as a whole.

### Solution to Problems

The present inventors have intensively studied to solve the above-described problem and resultantly found that the above-described problem can be solved by allowing the contamination-preventing agent composition to have a constitution containing a re-transfer agent having predetermined physical properties, leading to completion of the present invention.

The present invention is (1) a contamination-preventing agent composition imparted to a dryer in a dry part of a paper machine and comprising an emulsion, a re-transfer agent and water, wherein the re-transfer agent has a cloud point of 55°C or higher and an HLB value of 8 to 15.

The present invention is (2) the contamination-preventing agent composition according to (1), wherein the dynamic surface tension value at a lifetime of 100 ms by a maximum bubble pressure method is 65 mN/m or less.

The present invention is (3) the contamination-preventing agent composition according to (1) or (2), wherein the dryer is made of cast iron, and the contact angle to the cast iron is 70° or less.

The present invention is (4) the contamination-preventing agent composition according to any one of (1) to (3), wherein the re-transfer agent is at least one selected from the group consisting of polyoxyalkylene alkyl ether, polyoxyalkylene fatty acid ester, polyoxyalkylene sorbitan fatty acid ester and polyoxyalkylene sorbitol fatty acid ester.

The present invention is (5) the contamination-preventing agent composition according to any one of (1) to (4), wherein the emulsion is composed of a non-silicone oil, water and an emulsifier, and the non-silicone oil is at least one selected from the group consisting of polybutenes, synthetic ester oils, mineral oils, vegetable oils and liquid paraffins.

The present invention is (6) the contamination-preventing agent composition according to (5), wherein the compounding ratio of the re-transfer agent with respect to 10% by mass of the non-silicone oil is 0.1% by mass to 10% by mass.

The present invention is (7) the contamination-preventing agent composition according to any one of (1) to (6), wherein the compounding ratio of the re-transfer agent is 0.01% by mass to 10% by mass.

The present invention is (8) the contamination-preventing agent composition according to any one of (1) to (7), wherein a coating film is formed by being imparted to the dryer, and a part of the coating film is re-emulsified when the coating film comes in contact with a wet paper.

The present invention is (9) a contamination preventing method, comprising a first step of imparting the contamination-preventing agent composition according to any one of Claims (1) to (7) to a dryer on the upstream side to form a coating film, a second step of bringing a wet paper into contact with the coating film to re-emulsify a part of the coating film and transfer the re-emulsified emulsion to the wet paper, and a third step of bringing the wet paper carrying the emulsion into contact with a dryer on the downstream side to impart the emulsion to the downstream dryer.

### Advantageous Effects of Invention

With the contamination-preventing agent composition of the present invention, moisture is removed by drying of the emulsion to form a coating film, and then a moisture-containing wet paper comes into contact with the film, whereby a part of the coating film is re-emulsified.

At this time, since the coating film contains a re-transfer agent for promoting re-transfer, the re-emulsified contamination-preventing agent composition will promptly re-transfer to the wet paper.

Here, by using a re-transfer agent having a cloud point of 55°C or higher, when the contamination-preventing agent composition containing a re-transfer agent forms a coating film on a dryer, re-transfer of the contamination-preventing agent composition to the wet paper can be promoted without losing the active performance of the re-transfer agent even during heating with the dryer. The temperature of the dryer is generally 55°C or higher.

By using a re-transfer agent having an HLB value of 8 to 15, it is possible to effectively activate the interface between water and the coating film and promote re-emulsification.

It is preferable that the compounding ratio of the re-transfer agent is 0.01% by mass to 10% by mass based on the total amount.

For these reasons, by using a re-transfer agent having a cloud point of 55°C or higher and an HLB value of 8-15, the pick-up amount of the emulsion obtained by re-emulsification of the coating film onto the wet paper can be improved.

Therefore, for example, if a contamination-preventing agent composition is given to a dryer at the most upstream side with respect to traveling of the wet paper, it is possible to impart a sufficient amount even to a dryer on the downstream side via the wet paper.

As a result, it is possible to prevent pitch contamination as a whole for a plurality of dryers.

For the contamination-preventing agent composition of the present invention, the speed of movement to the interface between the coating film and the wet paper can be made faster by setting the dynamic surface tension value at a lifetime of 100 ms according to the maximum bubble pressure method to 65 mN/m or less.

That is, in the paper machine, it is a very short time from imparting of the contamination-preventing agent composition to a dryer until the dryer comes into contact with a wet paper, and by setting the dynamic surface tension value within the above range, it becomes possible to promptly exert the function of the re-transfer agent of re-emulsifying the coating film.

In the contamination-preventing agent composition of the present invention, the dryer is made of cast iron, and the contact angle to the cast iron is 70° or less, accordingly, the emulsion easily forms a coating film along the surface of the drier.

In the contamination-preventing agent composition of the present invention, the effect of re-emulsification can be exerted surely when the re-transfer agent is at least one selected from the group consisting of polyoxyalkylene alkyl ether, polyoxyalkylene fatty acid ester, polyoxyalkylene sorbitan fatty acid ester and polyoxyalkylene sorbitol fatty acid ester.

In the contamination-preventing agent composition of the present invention, when the emulsion is composed of a non-silicone oil, water and an emulsifier, the compounding ratio of the re-transfer agent with respect to 10% by mass of the non-silicone oil is 0.1% by mass to 10% by mass.

When the non-silicone oil is at least one selected from the group consisting of polybutenes, synthetic ester oils, mineral oils, vegetable oils and liquid paraffins, a coating film can be easily formed on the dryer, re-emulsification is easily performed, and pitch contamination can be surely prevented.

In the case where the contamination-preventing agent composition of the present invention forms a coating film by being imparted to a dryer and a part of the coating film is re-emulsified with a re-transfer agent by contact of the coating film with a wet paper, even if the composition is imparted only to a dryer on the upstream side, a sufficient amount of the composition can be imparted to a dryer on the downstream side via the wet paper, and pitch contamination of a plurality of dryers can be prevented sufficiently as a whole.

In the contamination preventing method of the present invention, pitch contamination of a plurality of dryers can be prevented sufficiently as a whole via a first step, a second step and a third step by using the contamination-preventing agent composition described above.

### Brief Description of Drawings

Figure 1 is a flowchart showing a contamination preventing method using a contamination-preventing agent composition according to the present embodiment.
Figure 2 is an explanatory diagram for explaining a contamination preventing method according to the present embodiment.
Figure 3 is a schematic diagram showing a dryer using a contamination-preventing agent composition according to the present embodiment.

### Description of Embodiments

Hereinafter, preferred embodiments of the present invention will be described in detail with reference to the drawings as necessary. The positional relationship such as up, down, left and right are based on the positional relationship shown in the drawing unless otherwise noted. Further, the dimensional ratios of the drawings are not limited to the illustrated ratios.

The contamination-preventing agent composition according to the present embodiment can prevent pitch contamination of a dryer by being imparted to the dryer in a dry part of a paper machine.

Specifically, even if the composition is imparted only to a dryer on the upstream side, a sufficient amount can be imparted to a dryer on the downstream side via a wet paper. As a result, pitch contamination can be sufficiently prevented for a plurality of dryers as a whole.

With the contamination-preventing agent composition, a coating film is formed by being imparted to a drier, thereby preventing pitch contamination of the dryer.

Thereafter, when the coating film comes into contact with the wet paper, a part of the coating film is re-emulsified, and the contamination-preventing agent composition is transferred to the wet paper.

The transferred contamination-preventing agent composition is carried by the wet paper and is imparted also to a dryer on the downstream side.

Details of these will be described later.

As a result, according to the contamination-preventing agent composition of the present embodiment, it is possible to sufficiently prevent pitch contamination as a whole for a plurality of dryers.

It is preferable for the contamination-preventing agent composition that the dynamic surface tension value at a lifetime of 100 ms by a maximum bubble pressure method is 65 mN/m or less.

When the dynamic surface tension value of the contamination-preventing agent composition exceeds 65 mN/m, the speed at which the re-transfer agent moves to the interface between the dryer and the emulsion tends to be delayed as compared with the case where the dynamic surface tension value is within the above range. In this case, emulsification does not occur instantaneously, and the pick-up amount to the wet paper becomes insufficient.

The dynamic surface tension value is a value measured in an environment of 25°C using an automatic dynamic surface tension meter BP-D5 (manufactured by Kyowa Interface Science, Inc.).

It is preferable for the contamination-preventing agent composition that the contact angle to cast iron is 70° or less.

When the contact angle of the contamination-preventing agent composition to cast iron exceeds 70°, there are drawbacks that it takes more time to remove moisture by drying and it becomes difficult to form a uniform coating as compared with the case where the contact angle is within the above range.

The contact angle is a value measured in an environment of 25°C and 50% humidity using DropMaster DMs - 401, Teflon needle 18 G.

Here, the dryer is generally made of cast iron.

Therefore, when the contamination-preventing agent composition is imparted to a dryer, the contamination-preventing agent composition can form a coating film on the surface of the dryer instantaneously by setting the contact angle to cast iron within the above-described range.

Cast iron is formed by casting an alloy containing iron as a main component and containing at least one selected from the group consisting of nickel, chromium, carbon and silicon.

The cast iron used to measure the contact angle may be the same as or different from the cast iron of a dryer. It is preferable that both of them are cast irons having a ten-point average roughness (Rz) of 0.16 µm or less, a maximum height (Rmax) of 0.21 µm or less, and an arithmetic mean roughness (Ra) of 0.04 µm or less.

In the contamination-preventing agent composition according to the present embodiment, the emulsion is composed of a non-silicone oil, water and an emulsifier. That is, the non-silicone oil is emulsified with an emulsifier using water as a medium.

The non-silicone oils includes mineral oils such as gear oil, dryer oil, turbine oil, spindle oil and the like, vegetable oils such as coconut oil, linseed oil, castor oil, rapeseed oil, corn oil and the like, liquid paraffin, isoparaffin, polyisobutylene, polybutene, maleated polybutene, synthetic ester oil, polyethylene wax, micro wax, 12-hydroxystearic acid and the like. These may be used singly or in combination of two or more.

Among them, the non-silicone oil is preferably at least one selected from the group consisting of polybutenes, synthetic ester oils, mineral oils, vegetable oils and liquid paraffins from the viewpoint of a film forming property and a pitch contamination preventing property.

The emulsifier is not particularly limited, and known nonionic surfactants, anionic surfactants, cationic surfactants, amphoteric surfactants and the like are used.

Among these, the emulsifier is preferably an anionic surfactant or a nonionic surfactant, from the viewpoint of storage stability of the emulsion.

In the contamination-preventing agent composition according to the present embodiment, the re-transfer agent includes polyoxyalkylene alkyl ethers, polyoxyalkylene alkyl thioethers, polyoxyalkylene fatty acid esters, polyoxyalkylene sorbitan fatty acid esters, polyoxyalkylene sorbitol fatty acid esters, glycerin mono-fatty acid esters and the like. These may be used singly or in combination of two or more.

Among them, the re-transfer agent is preferably at least one selected from the group consisting of polyoxyalkylene alkyl ethers, polyoxyalkylene fatty acid esters, polyoxyalkylene sorbitan fatty acid esters and polyoxyalkylene sorbitol fatty acid esters, from the viewpoint of ease of re-emulsification.

The re-transfer agent preferably has a cloud point of 55°C or higher.

When the cloud point is lower than 55°C, the function as a re-transfer agent may possibly be lost due to heat of a dryer as compared with the case where the cloud point is within the above range.

When the re-transfer agent is water-soluble, the cloud point is a temperature at which an aqueous solution containing 1% by mass of the re-transfer agent is heated to become cloudy.

In contrast, when the re-transfer agent is water-insoluble, the cloud point is a temperature at which a 25% (w/w) diethylene glycol monobutyl ether aqueous solution containing 10% by mass of the re-transfer agent is heated to become cloudy.

The re-transfer agent preferably has an HLB value of 8 to 15.

When the HLB value is less than 8 or exceeds 15, it is impossible to sufficiently activate the interface between the coating film made of the non-silicone oil described above and water, as compared with the case where the HLB value is within the above range.

The HLB value is a value measured by a known Griffin method.

In the contamination-preventing agent composition, the compounding ratio of the re-transfer agent is preferably 0.01% by mass to 10% by mass with respect to the total amount of the contamination-preventing agent composition.

When the compounding ratio of the re-transfer agent with respect to the total amount of the contamination-preventing agent composition is less than 0.01% by mass, there is a fear that the re-transfer becomes insufficient and the pick-up amount to the paper decreases, as compared with the case where the compounding ratio of the re-transfer agent is within the above range, while when the compounding ratio of the re-transfer agent with respect to the total amount of the contamination-preventing agent composition exceeds 10% by mass, the re-transfer agent itself bonds to the pitch or the like, which may cause contamination, as compared with the case where the compounding ratio of the re-transfer agent is within the above range.

In the contamination-preventing agent composition, the compounding ratio of the re-transfer agent with respect to 10% by mass of the non-silicone oil is preferably 0.1% by mass to 10% by mass.

When the compounding ratio of the re-transfer agent with respect to 10% by mass of the non-silicone oil is less than 0.1% by mass, there is a fear that the re-transfer agent cannot sufficiently re-transfer the non-silicone oil, as compared with the case where the compounding ratio of the re-transfer agent is within the above range, while when the compounding ratio of the re-transfer agent with respect to 10% by mass of the non-silicone oil exceeds 10% by mass, there is a fear that the effect of preventing adhesion of pitch contamination by the non-silicone oil becomes insufficient, as compared with the case where the compounding ratio of the re-transfer agent is within the above range.

The contamination-preventing agent composition according to the present embodiment is produced by stirring and mixing a non-silicone oil, an emulsifier and water to obtain an emulsion and stirring and mixing the emulsion, a re-transfer agent and water.

In the above-described stirring and mixing, a hand mixer, a homogenizer and the like are suitably used. In addition, they may be dispersed by a dispersing machine such as a sand mill, a bead mill, a ball mill or the like.

Next, the contamination preventing method using the above-mentioned contamination-preventing agent composition will be described.

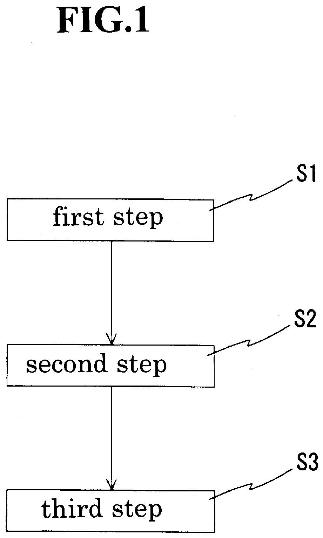

Figure 1 is a flowchart showing a contamination preventing method using the contamination-preventing agent composition according to the present embodiment.

As shown in FIG. 1, the contamination preventing method according to the present embodiment has a first step S1 of imparting the contamination-preventing agent composition a dryer on the upstream side to form a coating film, a second step S2 of bringing a wet paper into contact with the coating film to re-emulsify a part of the coating film and transfer the re-emulsified emulsion to the wet paper, and a third step S3 of bringing the wet paper carrying the emulsion into contact with a dryer on the downstream side to impart the emulsion to the downstream dryer.

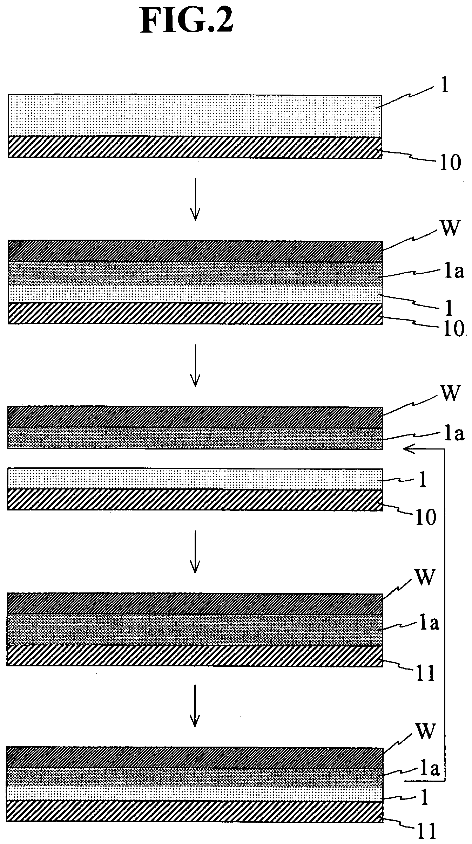

Figure 2 is an explanatory diagram for explaining a contamination preventing method according to the present embodiment.

As shown in FIG. 2, in the contamination preventing method, the contamination-preventing agent composition is first directly imparted to a dryer 10 on the upstream side of a dry part in the first step S1.

At this time, the dryer 10 is at a high temperature in order to dry a wet paper W. For this reason, in the surface of the dryer 10, a part of water contained in the contamination-preventing agent composition is evaporated, and a coating film 1 is formed of a non-silicone oil. The coating film 1 contains also a re-transfer agent.

Then, in the second step S2, when the traveling wet paper W comes into contact with a dryer 10 on the upstream side, at the same time as the wet paper W is dried, a part of the coating film 1 on the surface of the dryer 10 is re-emulsified by water contained in the wet paper W. At this time, since the re-transfer agent is contained in the emulsion 1a of the re-emulsified contamination-preventing agent composition, the emulsion 1a is transferred to the wet paper W.

The time from imparting the contamination-preventing agent composition to a dryer until the wet paper comes into contact with the dryer is extremely short, and is 40 ms to 160 ms.

Next, in the third step S3, the wet paper W travels while holding the emulsion 1a and comes into contact with a dryer 11 on the downstream side.

Then, since the side of the wet paper W to which the emulsion 1a has been transferred comes into contact with the dryer 11 on the downstream side, a part of the emulsion 1a is re-transferred to the dryer 11 on the downstream side.

Then, by separation of the wet paper W, the re-transferred emulsion 1a is heated again by the dryer 11 on the downstream side to form a coating film.

On the other hand, the emulsion 1a which has not been re-transferred to the dryer 11 on the downstream side is transferred to a dryer on the further downstream side of by the wet paper W, and re-transferred to the dryer in a like manner.

By repeating the imparting of the emulsion 1a of the contamination-preventing agent composition to a dryer on the downstream side as described above, it becomes possible to impart the emulsion 1a of the contamination-preventing agent composition to a plurality of dryers.

In the contamination preventing method, a contamination-preventing agent composition is continuously imparted to a dryer 10 on the upstream side, so that an emulsion of the contamination-preventing agent composition is imparted continuously also to a drier 11 on the downstream side via the wet paper W.

In the contamination preventing method according to the present embodiment, since the contamination-preventing agent composition described above is used, it is possible to increase the pick-up amount of the contamination-preventing agent composition to the wet paper W.

Further, through the first step S1, the second step S2 and the third step S3 described above, it is possible to prevent pitch contamination as a whole for the plurality of dryers.

Next, the spraying position of the contamination-preventing agent composition according to the present embodiment will be described.

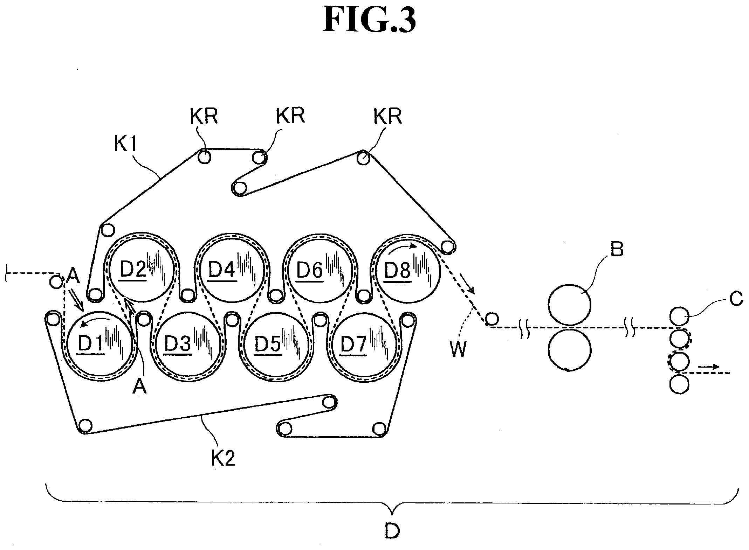

Figure 3 is a schematic diagram showing a dryer using the contamination-preventing agent composition according to the present embodiment.

As shown in FIG. 3, the contamination-preventing agent composition is used in a dry part D.

The dry part D includes a wet paper W, a plurality of cylindrical dryers D1, D2, D3, D4, D5, D6, D7 and D8 (hereinafter referred to as "D1 to D8") for heating and drying the wet paper W, canvases K1, K2 for pressing the wet paper against the dryers D1 through D8, a canvas roll KR for guiding the canvases K1, K2, a breaker stack roll B for gently adjusting the smoothness and paper thickness of the dried wet paper W, and a calender roll C for adjusting the smoothness and paper thickness of the dried wet paper W.

In the dry part D, the wet paper W is pressed against the surfaces of the dryers D1 to D8 by the canvases K1 and K2. As a result, the wet paper W adheres to the dryers D1 to D8 and is simultaneously heated and dried.

Thereafter, the wet paper W is sandwiched by the breaker stack roll B, and then the wet paper W is densified by the calender roll C.

The contamination-preventing agent composition is imparted to the dryer D 1 on the most upstream side of the dry part D at the position of the arrow A.

The method of imparting the contamination-preventing agent composition is not particularly limited, and for example, a shower method using a spray nozzle or the like, a spray method, and the like are used.

After the contamination-preventing agent composition is imparted at the position of the arrow A of the dryer D 1, the dryer D 1 is rotated to guide the wet paper W and the emulsion of the contamination-preventing agent composition is transferred to the wet paper W.

Then, the emulsion of the contamination-preventing agent composition is carried by the wet paper W and re-transferred to a dryer D3 on the downstream side to which the wet paper is guided, and re-transferred to a dryer D5 on the further downstream side and re-transferred to a dryer D7 on the further downstream side.

On the other hand, the contamination-preventing agent composition imparted at the position of the arrow A of the dryer D2 is re-transfers to a dryer D4 on the downstream side to which the wet paper is guided, and re-transferred to a dryer D6 on the further downstream side and re-transferred to a dryer D8 on the further downstream side.

By repeating the re-transfer as described above, the contamination-preventing agent composition or the emulsion thereof is imparted to the dryers D1 to D8 as a whole and pitch contamination can be prevented.

At this time, the spray amount of the contamination-preventing agent composition is preferably 0.02 mg/m² to 2.0 mg/m² in terms of the nonvolatile component amount per passage area of the wet paper.

When the spray amount is less than 0.02 mg/m², the contamination-preventing agent composition does not sufficiently adhere to the surface of a dryer and pitch contamination cannot be sufficiently prevented in some cases, as compared with the case where the spray amount is within the above-described range. In contrast, when the spray amount is over 2.0 mg/m², there is a possibility that the contamination-preventing agent composition itself causes contamination, as compared with the case where the spray amount is within the above-described range.

Although preferred embodiments of the present invention have been described above, the present invention is not limited to the above-described embodiments.

The contamination-preventing agent composition according to the present embodiment is composed of an emulsion, a re-transfer agent and water, and may contain additives such as a chelating agent, a pH adjusting agent, a preservative, a dispersing agent, a viscosity adjusting agent, a solid lubricant, a wetting agent, a dusting-preventing agent, a release agent, an adhesive, a surface modification agent, a cleaning agent, a paper strength enhancer, a sizing agent, a retention aid, a water repellent, an oil repellent, an anti-lubricant, a softener and the like.

According to the present embodiment, the contamination-preventing agent composition is imparted to a dryer, but it may be imparted not only to a dryer but also to a canvas, a canvas roll, a calender roll, a breaker stack roll and the like.

In the contamination-preventing agent composition according to the present embodiment, the dryer is made of cast iron, but it may be made of another material.

### (EXAMPLES)

Hereinafter, the present invention will be described more specifically based on Examples and Comparative Examples, but the present invention is not limited to the following Examples.

### <Example 1>

To an emulsion containing 10 parts by mass of liquid paraffin (non-silicone oil), 0.1 part by mass of polycarboxylic acid amine (emulsifier, anionic surfactant), 0.1 part by mass of stearic acid amine (emulsifier, anionic surfactant) and 88.8 parts by mass of purified water was added 1.0 part by mass of polyoxyalkylene alkyl ether (re-transfer agent, cloud point: 62°C, HLB: 8.1) and they were mixed by stirring to prepare a sample A of a contamination-preventing agent composition.

The dynamic surface tension value at 100 ms of the sample A was 45 mN/m and the contact angle to cast iron was 50°.

### <Example 2>

A sample B of a contamination-preventing agent composition was prepared in the same manner as in Example 1 except that 1.0 part by mass of another polyoxyalkylene alkyl ether (re-transfer agent, cloud point: 79°C, HLB: 14.7) was used instead of the polyoxyalkylene alkyl ether.

The dynamic surface tension value at 100 ms of the sample B was 49 mN/m and the contact angle to cast iron was 54°.

### <Example 3>

A sample C of a contamination-preventing agent composition was prepared in the same manner as in Example 1 except that 1.0 part by mass of polyoxyalkylene sorbitan fatty acid ester (re-transfer agent, cloud point: 60°C or higher, HLB: 14.9) was used instead of the polyoxyalkylene alkyl ether.

The dynamic surface tension value at 100 ms of the sample C was 62 mN/m and the contact angle to cast iron was 68°.

### <Example 4>

A sample D of a contamination-preventing agent composition was prepared in the same manner as in Example 1 except that 10 parts by mass of castor oil (vegetable oil, non-silicone oil) was used instead of liquid paraffin.

The dynamic surface tension value at 100 ms of the sample D was 52 mN/m and the contact angle to cast iron was 60°.

### <Example 5>

A sample E of a contamination-preventing agent composition was prepared in the same manner as in Example 1 except that 10 parts by mass of castor oil (vegetable oil, non-silicone oil) was used instead of liquid paraffin and 1 part by mass of polyoxyalkylene fatty acid ester (re-transfer agent, cloud point: 60°C or higher, HLB: 13.6) was used instead of the polyoxyalkylene alkyl ether.

The dynamic surface tension value at 100 ms of the sample E was 43 mN/m and the contact angle to cast iron was 52°.

### <Example 6>

A sample F of a contamination-preventing agent composition was prepared in the same manner as in Example 1 except that 10 parts by mass of ester synthetic oil (non-silicone oil) was used instead of liquid paraffin.

The dynamic surface tension value at 100 ms of the sample F was 50 mN/m and the contact angle to cast iron was 62°.

### <Example 7>

A sample G of a contamination-preventing agent composition was prepared in the same manner as in Example 1 except that 10 parts by mass of ester synthetic oil (non-silicone oil) was used instead of liquid paraffin and 1 part by mass of polyoxyalkylene sorbitol fatty acid ester (re-transfer agent, cloud point: 80°C or higher, HLB: 13.8) was used instead of the polyoxyalkylene alkyl ether.

The dynamic surface tension value at 100 ms of the sample G was 42 mN/m and the contact angle to cast iron was 50°.

### <Comparative Example 1>

A sample H of a contamination-preventing agent composition was prepared in the same manner as in Example 1 except that the polyoxyalkylene alkyl ether was not used.

The dynamic surface tension value at 100 ms of the sample H was 72 mN/m and the contact angle to cast iron was 102°.

### <Comparative Example 2>

A sample I of a contamination-preventing agent composition was prepared in the same manner as in Example 1 except that 1.0 part by mass of another polyoxyalkylene alkyl ether (cloud point: 53°C, HLB: 6.5) was used instead of the polyoxyalkylene alkyl ether.

The dynamic surface tension value at 100 ms of the sample I was 66 mN/m and the contact angle to cast iron was 85°.

### <Comparative Example 3>

A sample J of a contamination-preventing agent composition was prepared in the same manner as in Example 1 except that 1.0 part by mass of another polyoxyalkylene alkyl ether (cloud point: 52°C, HLB: 8.0) was used instead of the polyoxyalkylene alkyl ether.

The dynamic surface tension value at 100 ms of the sample J was 66 mN/m and the contact angle to cast iron was 76°.

### <Comparative Example 4>

A sample K of a contamination-preventing agent composition was prepared in the same manner as in Example 1 except that 1.0 part by mass of another polyoxyalkylene alkyl ether (cloud point: 62°C, HLB: 7.8) was used instead of the polyoxyalkylene alkyl ether.

The dynamic surface tension value at 100 ms of the sample K was 66 mN/m and the contact angle to cast iron was 79°.

### <Comparative Example 5>

A sample L of a contamination-preventing agent composition was prepared in the same manner as in Example 1 except that 1.0 part by mass of another polyoxyalkylene alkyl ether (cloud point: 100°C or higher, HLB: 16.0) was used instead of the polyoxyalkylene alkyl ether.

The dynamic surface tension value at 100 ms of the sample L was 67 mN/m and the contact angle to cast iron was 85°.

### <Comparative Example 6>

A sample M of a contamination-preventing agent composition was prepared in the same manner as in Example 1 except that 10 parts by mass of castor oil (vegetable oil, non-silicone oil) was used instead of liquid paraffin and the polyoxyalkylene alkyl ether was not used.

The dynamic surface tension value at 100 ms of the sample M was 69 mN/m and the contact angle to cast iron was 82°.

### <Comparative Example 7>

A sample N of a contamination-preventing agent composition was prepared in the same manner as in Example 1 except that 10 parts by mass of castor oil (vegetable oil, non-silicone oil) was used instead of liquid paraffin and 1.0 part by mass of another polyoxyalkylene alkyl ester (cloud point: 53°C, HLB: 6.5) was used instead of the polyoxyalkylene alkyl ether.

The dynamic surface tension value at 100 ms of the sample N was 68 mN/m and the contact angle to cast iron was 78°.

### <Comparative Example 8>

A sample O of a contamination-preventing agent composition was prepared in the same manner as in Example 1 except that 10 parts by mass of castor oil (vegetable oil, non-silicone oil) was used instead of liquid paraffin and 1.0 part by mass of another polyoxyalkylene alkyl ester (cloud point: 100°C or higher, HLB: 16.0) was used instead of the polyoxyalkylene alkyl ether.

The dynamic surface tension value at 100 ms of the sample O was 68 mN/m and the contact angle to cast iron was 80°.

### <Comparative Example 9>

A sample P of a contamination-preventing agent composition was prepared in the same manner as in Example 1 except that 10 parts by mass of ester synthetic oil (non-silicone oil) was used instead of liquid paraffin and the polyoxyalkylene alkyl ether was not used.

The dynamic surface tension value at 100 ms of the sample P was 70 mN/m and the contact angle to cast iron was 90°.

### <Comparative Example 10>

A sample Q of a contamination-preventing agent composition was prepared in the same manner as in Example 1 except that 10 parts by mass of ester synthetic oil (non-silicone oil) was used instead of liquid paraffin and 1.0 part by mass of another polyoxyalkylene alkyl ester (cloud point: 53°C, HLB: 6.5) was used instead of the polyoxyalkylene alkyl ether.

The dynamic surface tension value at 100 ms of the sample Q was 66 mN/m and the contact angle to cast iron was 73°.

### <Comparative Example 11>

A sample R of a contamination-preventing agent composition was prepared in the same manner as in Example 1 except that 10 parts by mass of ester synthetic oil (non-silicone oil) was used instead of liquid paraffin and 1.0 part by mass of another polyoxyalkylene alkyl ester (cloud point: 100°C or higher, HLB: 16.0) was used instead of the polyoxyalkylene alkyl ether.

The dynamic surface tension value at 100 ms of the sample R was 67 mN/m and the contact angle to cast iron was 75°.

### (Evaluation method)

### 1. Contamination preventing test

Each 0.2 g of the samples obtained in Examples 1 to 7 and Comparative Examples 1 to 11 were sprayed onto a 5 × 25 cm square stainless steel plate and dried with heating at 80°C.

Next, a 5 × 25 cm square broad-leaf tree bleached kraft pulp (LBKP) was adjusted to a water content of 60%, which was brought into contact with the sample on the stainless steel plate for 10 seconds at a contact pressure of 30 g/cm². In this way, a part of the sample was transferred to LBKP.

Next, another stainless steel plate was prepared, and the above-mentioned LBKP was brought into contact with this at a contact pressure of 30 g/cm² for 10 seconds, and the sample was re-transferred from the LBKP to the another stainless steel plate.

Then, onto the another stainless steel plate, a heat-resistant tape (trade name: No.5413, manufactured by 3M Japan Co., Ltd.) was pasted so as to sandwich the re-transferred sample, and the sample was heated at 80°C.

Then, the magnitude of the force when peeling the heat-resistant tape was measured. The smaller the value, the easier the pitch is peeled (pitch is hard to adhere), meaning the high contamination preventing effect. As a blank, measurements were also made on samples not sprayed on the stainless steel plate.

The obtained results are shown in Table 1.

### 2. Actual machine evaluation

The samples of Examples 1, 5 and 7 and Comparative Examples 1, 2, 5, 6, 7, 9 and 10 were sprayed at a rate of 5 cc/min to the dryer D1 at the position of the arrow A shown in FIG. 3, and the dryer was operated for 60 minutes.

Further, doctor blades (dryer contamination-removing apparatus) not shown were placed so as to come into contact with the dryers D1, D3, D5 and D7, respectively.

For each dryer, the presence or absence of the pitch accumulated on the doctor blade was visually observed.

The obtained results are shown in Table 1.

**[Table 1]**

| | Peeling force (N) | Presence or absence of pitch | | | |
|---|---|---|---|---|---|
| | | D1 | D3 | D5 | D7 |
| Example 1 | 1.57 | Absent | absent | present | - |
| Example 2 | 1.60 | - | - | - | - |
| Example 3 | 1.79 | - | - | - | - |
| Example 4 | 1.14 | - | - | - | - |
| Example 5 | 1.09 | absent | absent | absent | absent |
| Example 6 | 1.02 | - | - | - | - |
| Example 7 | 0.89 | absent | absent | absent | absent |
| Comparative Example 1 | 2.63 | absent | present | present | - |
| Comparative Example 2 | 2.44 | absent | present | present | - |
| Comparative Example 3 | 2.54 | - | - | - | - |
| Comparative Example 4 | 2.59 | - | - | - | - |
| Comparative Example 5 | 2.38 | absent | present | present | - |
| Comparative Example 6 | 1.98 | absent | present | present | present |
| Comparative Example 7 | 2.05 | absent | present | present | present |
| Comparative Example 8 | 2.12 | - | - | - | - |
| Comparative Example 9 | 1.85 | absent | present | present | present |
| Comparative Example 10 | 1.87 | absent | present | present | present |
| Comparative Example 11 | 1.97 | - | - | - | - |
| blank | 2.84 | - | - | - | - |

From the results in Table 1, the samples of Examples 1 to 7 showed lower tape peeling force as compared with the samples of Comparative Examples 1 to 11 and the blank sample. In particular, it was found that the samples of Examples 4 to 7 had extremely low tape peeling force and the effect remarkably appeared. From this, it was found that the contamination-preventing agent composition of the present invention has a pitch adhesion preventing effect.

Further, in the test on an actual machine, the samples of Examples 5 and 7 manifested a sufficient contamination preventing effect even for a dryer on the downstream side. On the other hand, any of the samples of Comparative Examples 5 to 7 and 9 and 10 were able to prevent the pitch contamination of the dryer D1, but could not prevent the pitch contamination of the downstream dryer.

### Industrial Applicability

The contamination-preventing agent composition of the present invention is used by being imparted to a dryer in a dry part at the time of paper making. According to the contamination-preventing agent composition of the present invention, it is possible to prevent pitch contamination of a plurality of dryers as a whole, so that the yield in the production of paper can be greatly improved.

### Reference Signs List

- 1: coating film,
- 1a: emulsion,
- 10, 11: dryer,
- B: breaker stack roll,
- C: calender roll,
- D: dry part,
- D1, D2, D3, D4, D5, D6, D7, D8: dryer,
- K1, K2: canvas,
- KR: canvas roll,
- S1: first step,
- S2: second step,
- S3: third step,
- W: wet paper

## Claims

1. A contamination-preventing agent composition imparted to a dryer (D1-D8) in a dry part (D) of a paper machine and comprising an emulsion, a re-transfer agent and water, wherein said re-transfer agent has a cloud point of 55°C or higher and an HLB value of 8 to 15.

2. The contamination-preventing agent composition according to Claim 1, wherein the dynamic surface tension value at a lifetime of 100 ms by a maximum bubble pressure method is 65 mN/m or less.

3. The contamination-preventing agent composition according to Claim 1 or 2, wherein said dryer (D1-D8) is made of cast iron, and the contact angle to the cast iron is 70° or less.

4. The contamination-preventing agent composition according to any one of Claims 1 to 3, wherein said re-transfer agent is at least one selected from the group consisting of polyoxyalkylene alkyl ether, polyoxyalkylene fatty acid ester, polyoxyalkylene sorbitan fatty acid ester and polyoxyalkylene sorbitol fatty acid ester.

5. The contamination-preventing agent composition according to any one of Claims 1 to 4, wherein said emulsion is composed of a non-silicone oil, water and an emulsifier, and said non-silicone oil is at least one selected from the group consisting of polybutenes, synthetic ester oils, mineral oils, vegetable oils and liquid paraffins.

6. The contamination-preventing agent composition according to Claim 5, wherein the compounding ratio of said re-transfer agent with respect to 10% by mass of said non-silicone oil is 0.1% by mass to 10% by mass.

7. The contamination-preventing agent composition according to any one of Claims 1 to 6, wherein the compounding ratio of said re-transfer agent is 0.01% by mass to 10% by mass.

8. The contamination-preventing agent composition according to any one of Claims 1 to 7, wherein a coating film is formed by being imparted to said dryer (D1-D8), and a part of said coating film (1) is re-emulsified when the coating film comes in contact with a wet paper (W).

9. A contamination preventing method, comprising
a first step (S1) of imparting the contamination-preventing agent composition according to any one of Claims 1 to 7 to a dryer on the upstream side to form a coating film (1),
a second step (S2) of bringing a wet paper (W) into contact with the coating film (1) to re-emulsify a part of the coating film (1) and transfer the re-emulsified emulsion (1a) to the wet paper (W), and
a third step (S3) of bringing said wet paper (W) carrying said emulsion (1a) into contact with a dryer on the downstream side to impart said emulsion (1a) to the dryer on the downstream side.
